# EUROPEAN PATENT APPLICATION

(11) **EP 1 864 795 A1**
(43) Date of publication of application: **12.12.2007**
(21) Application number: 06730445.1
(22) Date of filing: 29.03.2006
(51) Int. Cl.: B32B 27/32, B29C 61/06, B65D 65/40

(54) **STRETCH/SHRINK LAYERED FILM AND PROCESS FOR PRODUCING THE SAME**

(30) Priority: 30.03.2005 JP 2005096792; 25.07.2005 JP 2005214715
(71) Applicant: MITSUBISHI PLASTICS, INC., Chiyoda-ku, Tokyo 100-0005 (JP)
(72) Inventor: NEMOTO, Tomoyuki, c/o Nagahama Plant of, Nagahama-shi, Shiga 526-8660 (JP); TANIGUCHI, Kouichirou, c/o Nagahama Plant of, Nagahama-shi, Shiga 526-8660 (JP)
(74) Representative: Gille Hrabal Struck Neidlein Prop Roos
(86) International application number: PCT/JP2006/306497
(87) International publication number: WO 2006/106747

(57) **Abstract**

A stretch shrink layered film, which is a layered film constituted by at least three layers, both surface layers having as principal constituent an (A) constituent, which is an ethylene series polymer, the middle layer having as principal constituent a (B) constituent, which is an ionomer series resin composition, and, the thickness ratio of the middle layer with respect to the total film thickness being 35% to 90%, while the total value of thermal shrinkage ratio in the longitudinal direction and transversal direction when immersed in an 80°C oil bath for 10 seconds is 30% or greater.

## Description

### [Technical Field]

The present invention relates to stretch shrink layered film and process for producing the same; in more specifically, it relates to stretch shrink layered film used mainly in pre-packaging and overwrap shrink film applications, and the like, of various trays and containers, and the like, containing fresh food or processed food, and process for producing the same.

### [Background Art]

Polyvinyl chloride (hereinafter may be sometimes abbreviated as PVC) series films and polyolefin (hereinafter may be sometimes abbreviated as PO) series films are known as shrink films having heat-shrinkable properties that are used mainly in pre-packaging and overwrap shrink film applications of various trays and containers containing fresh food or processed food. This is due to the fact that shrink films comprising PVC or PO series materials satisfy user's requirements relatively broadly, including practical characteristics, such as, mechanical strength, transparency and shrink properties, which are the main required characteristics, and aspects of costs.

Among these, however, since PVC series films pose concerns such as issues of waste processing, shrink films comprising materials other than PVC are strongly in demand. Therefore, in the current situation, shrink films comprising PO series materials occupy most of the market in the above-mentioned applications.

Shrink films in the aforementioned applications are divided into two broad categories depending mainly on the container used. One is high shrink type shrink film, used mainly for overwrap shrink packaging of lidded containers of boxed lunches, prepared food, and the like, for convenience stores, and the other is stretch shrink film, used in packaging method in which non-lidded trays comprising expanded polystyrene or polypropylene series material mainly used in stretch packaging serve as containers, and after stretch packaging this, shrink packaging mainly for exhibiting wrinkle removal and tight film tension.

In packaging methods where high shrink type shrink films are used, packaging machines of the melt-cut sealing method called horizontal pillow type machine are mainly used. In regards to the present packaging method, it is a method whereby, during transport of the film, first, holes are formed in the film with a given pitch by passage through rolls with attached needles. Next, the film is formed into a cylinder so as to envelope a container, heat sealing is performed by crimping the film at the bottom of the container in the longitudinal direction with a roller, and then melt-cut sealing is performed at the front and back of the container. Thereafter, the container is passed through a shrink tunnel, and shrink packaged while letting the air escape from the pinholes of the film formed beforehand. In the packaging method considered, in order to obtain tight packaging finishes according to containers of various shapes and sizes, physical properties are sought, such as, high shrinking ratio and no tearing of film at pinholes. Since these films are manufactured by preparation methods using complex treatments such as multi-layering by combining specific amounts of various materials, cross-linking by an electron beam, or the like, recycling within the preparation process is difficult, or, in general, the film manufacturing cost is high (for instance, see Japanese Patent Publication No. H1-47311 and Japanese Patent Publication No. H5-64589).

In addition, in regard to packaging method using stretch shrink films, it is a method whereby a tray used for stretch packaging in general is overwrapped with a film, the film is folded under the tray, and then shrink packaging is performed, and in which a packaging machine with a shrink tunnel added in the process after the horizontal pillow type machine similar to a stretch packaging machine or a folding type packaging machine called push up type machine, is used.

Stretch packaging is a packaging method whereby packaging finishes such as wrinkle removal and bottom seal properties are exhibited by the viscoelastic characteristics of the stretch film used, such as, mainly stress-distortion curve and stress relaxation; in contrast, packaging using stretch shrink films is a packaging method whereby packaging finish such as wrinkle removal and bottom seal properties after stretch packaging are exhibited by stretch packaging, then a process of heat sealing the bottom portion, and passage through a shrink tunnel, greatly differing from stretch packaging in general on the point that tight packaging finish can be realized.

Among the above-mentioned packaging machines, since the horizontal pillow type machines, despite their high packaging capabilities (in general on the order of 60 to 80 packs/minute), have poor efficiency of changeover operation such as size change due to long packaging lines, they have been adopted massively at packaging centers, food processing plants, and the like, where large quantities of identical products are packaged and where there are relatively few changeover operations, and the products, after packaging, are shipped to each store and put on display. Meanwhile, since the push up type machines, despite their low packaging capabilities (in general on the order of 25 to 50 packs/minute), can handle a relatively large number of tray sizes with one film size (for instance, a 350mm-wide roll) and are relatively compact such that a small installation space is sufficient, they have been introduced into packaging centers and the like; however, mainly, they have been adopted massively in-store (backyard) at supermarkets.

As described above, packaging of fresh produce and the like is divided broadly into those products that are packaged in a packaging center or the like and shipped to each store, and those products that are packaged in-store and put on display directly within the store; however, recently, on the aspects of total cost seen from the labor cost and efficiency of packaging operation, the proportion of in-store packaging decreased, and the proportion of concentrated, large-volume, high speed packaging at packaging centers and the like is on the rise. In regard to packaging at packaging centers, packaged products on the order of 2 to 4 packs are stacked and packed into a container to be shipped to each store by refrigerator truck. Therefore, with conventional stretch packaging only, there is such problem as, tearing of film, sagging of film due to stacking, and the like, occur after shipping due to vibration during transportation, friction of products against each other, and the like, decreasing the display effect of the products at store after shipping, and in some cases, requiring re-packaging.

In order to solve these problems, there is an increasing trend in the use of stretch shrink films, which allow film strength compared to stretch film and tight film tension in packaged products to be obtained. In the packaging method considered, since the packaging machine is identical to conventional stretch packaging machines, adding only a shrink tunnel in the process after packaging, and, in addition, since the tray shapes do not diverge, sufficiently satisfactory packaging finish can be obtained with a relatively small shrink ratio, and without requiring high shrinking ratio as in the above-mentioned boxed lunch container packaging. However, since the content is often fresh food, heat shrinkability at relatively low temperature (in general, on the order of 80°C) is sought (hereinafter, in the present invention, referred to as low temperature shrinkability).

In addition, in regard to methods for producing film for use in conventional shrink packaging, methods according to the tenter method or the tubular method have been adopted mainly, which are methods whereby a melt-extruded resin is temporarily solidified by rapid cooling, a raw film or a raw tube is collected, which is then reheated and drawn. This is believed to be due mainly to the ability to confer the desired thermal shrinkage characteristics and film physical properties relatively readily by adjusting the temperature at reheating time, the draw ratio and draw speed, and the like.

Meanwhile, in regard to methods for producing film for use in stretch packaging, the inflation method has been adopted mainly, which is a method whereby melt-extruded resin is extruded from a circular die in a cylindrical form without being temporarily solidified by rapid cooling, and air is blown into this cylinder to inflate the molten cylinder.

This is believed to be due to the generally broader condition setting range of the inflation method relatively to the tenter method or the tubular method, in addition, the ability to produce stably, and furthermore, the inexpensive cost of the manufacturing equipment. In general, with the inflation method, a raw material resin is heated to a temperature at the melting point (Tm point) or higher, extruded into a cylindrical shape from a circular die, and the molten cylinder is inflated by blowing air in to be turned into a film; in so doing, drawing is effected by the air in the diameter direction and longitudinally by pulling. However, during this drawing, as the resin is in a high temperature region and has low elastic modulus and viscosity, if only inflation forming is carried out, from the point of conferring heat shrink deformation, the film is substantially non-drawn, and although it slightly exhibits heat shrinkability, in general, turning it into a film that is oriented enough to exhibit shrink ratio (low temperature shrinkability) in particular at relatively low temperature (on the order of 80°C) is difficult.

### [Disclosure of the Invention]

### [Issues to be Addressed by the Invention]

It is thought that if a stretch shrink film with excellent low temperature shrinkability can be obtained also with an inflation forming machine that has generally satisfactory productivity and inexpensive costs of manufacturing equipment, it could be an efficient means to solve the problematic point regarding the above-mentioned aspects of manufacturing costs. Herein, ionomer resin may be cited as a resin with high elastic modulus and viscosity at melt time. For instance, Japanese Patent Application Laid-open No. S54-24982, Japanese Patent Application Laid-open No. 2000-135760, Japanese Patent Publication No. H3-80627 may be cited as well-known references related to stretch film, wrap film and shrink (heat shrinkable) film using ionomer resin.

In Japanese Patent Application Laid-open No. S54-24982, stretch film for use in food packaging is proposed, comprising, layered on both sides of a layer comprising ionomer resin, layers comprising an ethylene/vinyl acetate copolymer with a vinyl acetate amount of 5 to 40 mass%. Such a film has similar properties to PVC series film, and is considered to excel in automatic packaging ability. Specifically, a single Example is shown as ionomer resin, in which product name Surlyn A1650 (base polymer: ethylene/methacrylic acid copolymer, methacrylic acid amount: 9 mass%, neutralization metal ion species: zinc, MFR: 1.5g/10 minute, melting point: 96°C) from Du Pont is used to obtain a three-layer stretch film with a blow-up ratio of 5-fold and thickness of each layer of 12.5*µ*m/5*µ*m/12.5*µ*m with a multi-layer inflation forming apparatus. However, the invention states that the main objective is to increase the heat resistance when ionomer resin is heat-sealed, and that in order to obtain physical properties that are necessary as a stretch film, the thickness of the middle layer must not exceed the thickness of each layer at the front and the back. From these, the invention does not have as objective exhibiting shrink properties by the ionomer resin, and in addition, even if shrink properties could be exhibited, as the thickness ratio of the middle layer is low, sufficient low temperature shrinkability is not obtained, and the film is not suitable as a stretch shrink film.

In Japanese Patent Application Laid-open No. 2000-135760, with the object of providing a non-halogen series multilayered wrap film enabling manufacturing by high-speed processing, having excellent optical properties, adhesiveness to wrapped materials, cuttability at the time of use, and the like, and process for producing the same, a multilayered wrap film having layers comprising ethylene/unsaturated ester copolymer layered on both sides of ethylene/unsaturated carboxylic acid copolymer ionomer in which the amount of unsaturated carboxylic acid is 3 to 20 mass% and the degree of neutralization by metal ion is 0.1 to 10%, and a process for producing the same by a co-extrusion T-die film forming machine, are proposed. However, in the invention, the main objective is high-performance forming in a T-die forming machine, and does not have exhibiting shrink properties by ionomer resin as objective.

In Japanese Patent Publication No. H3-80627, proposed are a multilayered heat shrinkable film, where in a multilayered heat shrinkable film comprising (a) one or two outer layers of substance chosen from the group comprising polyethylene, polypropylene, propylene/ethylene copolymer and mixtures thereof, (b) a core layer of substance having a melting point that is the temperature necessary to orient the substance of the outer layer, or lower, chosen from the group comprising ethylene/acid copolymer and related ionomer; ethylene/acid/acrylate terpolymer and related ionomer; mixture of up to approximately 50% of any of the above and ethylene vinyl acetate; mixture of ethylene/ester copolymer and up to approximately 50% of ethylene vinyl acetate; as well as combination of the above-mentioned substance, the core layer has a thickness of approximately 50 to 95% of the total thickness of the heat shrinkable film, and a method, which is a method for manufacturing the multilayered heat shrinkable film, where a multilayered film comprising one or two said outer layer and said core layer is drawn at a temperature that is the orientation temperature, or above, of the substance in the one or two outer layers, but the melting point of the substance, or lower. Herein, the main objective of the invention is to obtain a multilayered heat shrinkable film having high shrinking ratio and low shrink force (shrink stress), and in addition, from the main purport of the invention, the relationship melting point of substance in the outer layer greater than or equal to drawing temperature greater than or equal to orientation temperature of substance in the outer layer (generally 110°C or higher) greater than or equal to melting point of the substance in the core layer is established. In addition, it is described that a substance having low frictional coefficient is preferred for the outer layer. In addition, although it is supposed that a well-known method can be adopted as method for orienting the film, it is stated that a preferred method is the "bubble" method (tubular drawing method), in addition, shown concrete examples are tubular drawing method as Method 1 and tenter drawing method as Method 2. That is to say, these methods are both methods whereby melt-extruded resin temporarily solidified by rapid cooling to collect raw film or raw tube, followed by reheating and drawing.

Thus, an object of the present invention is to provide a low temperature shrinkable stretch shrink layered film, and this film can be produced also by the inflation method.

### [Means to Solve the Issues]

As a result of earnest studies, the present inventors discovered that the above-mentioned issues could be solved by taking ethylene series polymer as both surface layers, and setting to a specific thickness ratio a middle layer having as principal constituent an ionomer series resin composition, and reached completion of the present invention.

The stretch shrink layered film of the present invention is a layered film constituted by at least three layers, both surface layers having as principal constituent an (A) constituent, which is an ethylene series polymer, the middle layer having as principal constituent a (B) constituent, which is an ionomer series resin composition, and, the thickness ratio of the middle layer with respect to the total film thickness being 35% to 90%, while the total value of thermal shrinkage ratio in the longitudinal direction and transversal direction when immersed in an 80°C oil bath for 10 seconds is 30% or greater.

Note that, the upper limit values and the lower limit values of numerical value ranges in the present invention are such that, even when a value falls slightly out of the limits of the numerical value range specified by the present invention, the value is deemed included within the same range of the present invention as long as the same effect is provided as when within the numerical value range. In addition, the principal constituent in the present invention means a constituent that is contained in the largest amount, meaning a constituent contained in the amount of generally 50 mass% or greater, preferably 70 mass% or greater, more preferably 80 mass% or greater.

### [Effects of the Invention]

According to the present invention, a stretch shrink layered film having satisfactory low temperature shrinkability, tight tension after shrinkage, and excellent packaging finish, and a process for producing the same can be provided.

### [Brief Description of the Drawings]

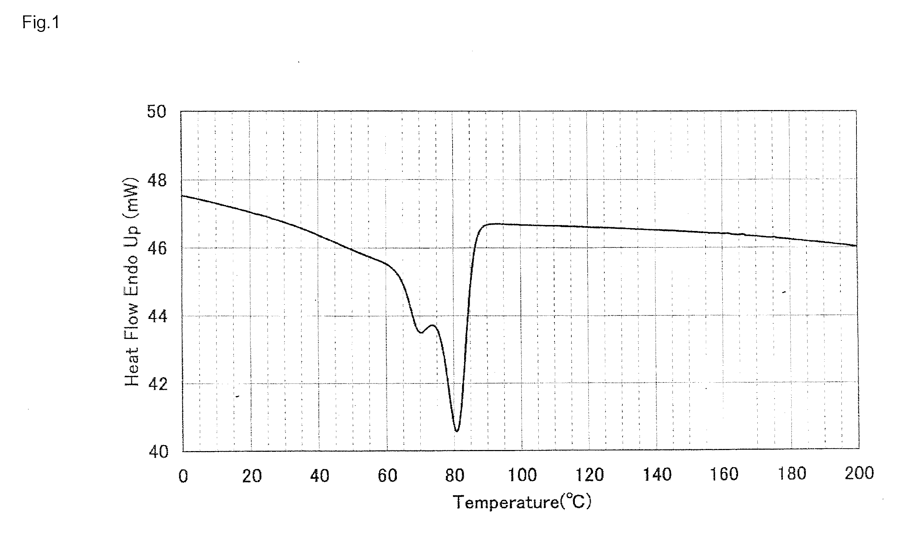

[Fig. 1] Thermogram by differential scanning calorimetry showing crystallization peak temperature when cooling (B) constituent, which is the ionomer series resin composition of Example 1; the horizontal axis represents temperature (°C), the longitudinal axis represents heat flux (mW).

### [Best Mode for Carrying out the Invention]

The present invention will be described hereinafter.
The stretch shrink layered film of the present invention is a layered film constituted by at least three layers, both surface layers having as principal constituent an (A) constituent, which is an ethylene series polymer, and in addition, the middle layer having as principal constituent a (B) constituent, which is an ionomer series resin composition.

As the (A) constituent, which is an ethylene series polymer, which is the principal constituent used in the above-mentioned both surface layers, for instance, copolymers having as principal constituents low density polyethylene, linear low density polyethylene, linear very low density polyethylene, medium density polyethylene, high density polyethylene and ethylene, that is to say, copolymer or multi-component copolymer of ethylene and a one species or two or more species of co-monomers chosen from among unsaturated compounds such as, α-olefins having 3 to 10 carbons such as propylene, butene-1, pentene-1, hexene-1, heptene-1 and octene-1; vinyl esters such as vinyl acetate and vinyl propionate; unsaturated carboxylate esters such as methyl acrylate, ethyl acrylate, methyl methacrylate and ethyl methacrylate; conjugated diene and non-conjugated diene, or mixed compositions thereof, can be cited. The ethylene unit content of an ethylene series polymer in general exceeds 50 mass%.

Among these, which is an ethylene series polymer, at least one species of ethylene series polymer chosen from among low density polyethylene, linear low density polyethylene, linear very low density polyethylene, ethylene-vinyl acetate copolymer, ethylene-acrylic acid ester copolymer and ethylenemethacrylic acid ester copolymer is preferable as (A) constituent. Methyl acrylate, ethyl acrylate and the like, may be cited as acrylic acid ester, for instance. Methyl methacrylate, ethyl methacrylate and the like, may be cited as methacrylic acid ester, for instance.

In particular among them, as (A) constituent, which is an ethylene series polymer, ethylene-vinyl acetate copolymer having an amount of vinyl acetate of 8 mass% to 30 mass%, preferably 10 mass% to 28 mass%, and more preferably 12 mass% to 25 mass%, and a melt flow rate (hereinafter, may be sometimes abbreviated as MFR) (JIS K7210, 190°C, load21.18N) of 0.2g/10 minute to 10g/10 minute, preferably 0.5g/10 minute to 8g/10 minute, and more preferably1g/10 minute to 5g/10 minute, is preferred. The reason is, both surface layers carry the function of exhibiting during the forming processing, film forming stability (for instance, bubble stability in inflation forming), adequate slip properties of the stretch shrink layered film, surface properties such as surface adhesiveness and anti-clouding properties, transparency, mechanical properties such as flexibility, and the like, and must fulfill all these characteristics; in addition, ethylene-vinyl acetate copolymer is also preferred from the aspects of costs and on the point that it can be adjusted readily.

In regard to the above-mentioned ethylene-vinyl acetate copolymer, if the amount of vinyl acetate is 8 mass% or greater, as crystallinity is low, the film does not harden, and flexibility and elasticity recovery become satisfactory; in addition, the surface adhesiveness is easily exhibited without loosing transparency and low temperature shrinkability of the entire film. If 30 mass% or less, heat resistance, film strength and the like, are maintained sufficiently, such that bleed characteristics of the anti-clouding agent added, surface adhesiveness, unrolling properties and appearance of the film become satisfactory.

If MFR is 0.2g/10 minute or greater, extrusion processability becomes stable, and if 10g/10 minute or less, film forming stability is also obtained in inflation forming.

In order to obtain the mechanical properties and thermal shrinkage characteristic of both surface layers, in particular low temperature shrinkability and the like, the melting point of (A) constituent, which is an ethylene series polymer, is 65°C to 100°C, preferably 70°C to 100°C, and more preferably 75°C to 98°C.

If the above-mentioned melting point is 65°C or higher, heat resistance, film strength and the like, do not become a problem in practice; in addition, the bleed characteristics of the anti-clouding agent added, surface adhesiveness, unrolling properties and appearance of film become satisfactory. If 100°C or lower, as crystallinity is low, the film does not harden, such that flexibility and elasticity recovery become satisfactory, without losing transparency of the entire film and low temperature shrinkability; in addition, the surface adhesiveness is exhibited readily.

The method for producing the above-mentioned (A) constituent, which is an ethylene series polymer, is not limited in particular, and well-known polymerization methods using well-known catalysts for olefin polymerization, for instance, slurry polymerization method, solution polymerization method, bulk polymerization method, gas phase polymerization method, and the like, using a multi-site catalyst represented by Ziegler Natta catalyst, or a single-site catalyst represented by metallocene catalyst, in addition, bulk polymerization method using a radical initiator, and the like, can be cited.

As ionomer resin, a copolymer comprising ethylene, an unsaturated carboxylic acid, and, as an optional constituent, another unsaturated compound, with at least a portion of this unsaturated carboxylic acid constituent being neutralized with at least any one among metal ions or organic amines, can be cited. In addition, a copolymer comprising ethylene, an unsaturated carboxylate ester, and, as an optional constituent, another unsaturated compound, with at least a portion of this unsaturated carboxylate ester constituent being saponified, can also be cited.

As the above-mentioned unsaturated carboxylic acid, those with 3 to 8 carbons are preferred, and concretely, acrylic acid, methacrylic acid, fumaric acid, itaconic acid, maleic anhydride, monomethyl maleate, monoethyl maleate and the like, can be used. Among these, acrylic acid or methacrylic acid can be used preferably.

Unsaturated ester can be used as the above-mentioned other unsaturated compound as optional constituent, and as concrete examples, unsaturated ester of saturated carboxylic acid such as vinyl acetate, or acrylic acid ester, methacrylic acid ester and the like, can be cited. Note that these can be used as one species alone, or two or more species can be used in combination.

As the above-mentioned neutralization constituent in the copolymer, monovalent to trivalent cations of metals, such as, Na⁺, K⁺, Li⁺, Ca²⁺, Mg²⁺, Zn²⁺, Cu²⁺, Co²⁺, Ni²⁺, Mn²⁺ and Al³⁺ (hereinafter, may be sometimes abbreviated as metal ions), or organic amines can be cited. In the present invention, sodium or zinc can be used suitably. Note that these can be used as one species alone, or two or more species can be used in combination.

In the above-mentioned copolymer, a polymer composition where the amount of ethylene is 50 mass% to 90 mass%, and preferably 60 mass% to 88 mass%, the amount of unsaturated carboxylic acid is 10 mass% to 30 mass%, and preferably 12 mass% to 20 mass%, and other unsaturated compound is 0 mass% to 40 mass%, preferably 0 mass% to 20 mass%, can be used suitably. In addition, regarding the degree of neutralization, those where 15% to 80%, and preferably 20% to 60%, of the amount of unsaturated carboxylic acid in the copolymer constituent has been neutralized with the aforementioned metal cation can be used suitably. If within the limits of this polymer composition and degree of neutralization, since crystallinity of the ionomer resin decreases to some extent, crystallization becomes difficult under the cooling conditions during the forming process, and retaining transparency of the film becomes possible. In addition, cohesive strength of ionic crosslinks, for instance, satisfactory low temperature shrinkability by the drawing process in the cooling step from a molten state as in inflation forming, can be provided. Note that, ionomer resin can be used as one species alone, or two or more species can be used in combination. In so doing, ionomer resins with different metal ion can be also combined.

Note that, in regard to degree of neutralization of ionomer resin, the degree of neutralization can be adjusted by blending to an ionomer resin with a high degree of neutralization a non-neutralized copolymer. Concretely, for instance, when bringing to 40% the degree of neutralization of an ionomer resin neutralized with a cation of a monovalent metal having a degree of neutralization of 80%, a non-neutralized copolymer is melt-knead to an ionomer resin having a degree of neutralization of 80% at a proportion of 50 mass%/50 mass%.

The (B) constituent, which is an ionomer series resin composition, has preferably at least two crystallization peak temperatures present between 60°C and 90°C when cooling at a cooling rate of 10°C/min by differential scanning calorimetry.

The presence of a crystallization peak temperature between 60°C and 90°C, allows the stretch shrink film to be provided with suitable low temperature shrinkability with the bubble frost line in a stable state, for instance, in the cooling step from molten state during a drawing process as in inflation forming. More preferably, the lower limit of the crystallization peak temperature is 65°C or higher and the upper limit is 85°C or lower.

In addition, the presence of at least two crystallization peak temperatures within the temperature range allows excessive orientation accompanying drawing to be suppressed at the crystallization peak temperature region on the high temperature side, for instance, in the cooling step from molten state during a drawing process as in inflation forming, and when packaging with an automatic packaging machine, less longitudinal tear and rupture trouble of the film occur, simultaneously, this allows a distortion that is adequate for low temperature shrinkability to be provided until the crystallization peak temperature region on the low temperature side.

With the above, balancing the mechanical properties of less tear and rupture trouble occurring during packaging with automatic packaging machine, and low temperature shrinkability adequate for stretch shrink film, becomes possible. Note that three or more crystallization peak temperatures may exist between 60°C and 90°C when cooling by differential scanning calorimetry, as long as the range does not exceed the main purport of the present invention. In addition, the upper limit for the number of crystallization peak temperatures is five.

Note that the above-mentioned crystallization peak temperature is the temperature at which the value of the first order derivative versus temperature of the amount of variation in the thermogram is zero, which can be measured as follows:

Using differential the thermal scanning calorimeter model DSC-7 manufactured by Perkin Elmer, according to JlS K7121, approximately 10mg of (B) constituent, which is an ionomer series resin composition, was precisely weighted on an aluminum pan for DSC measurement, heated from room temperature to 200°C at a heating rate of 10°C/min, kept at the same temperature for 2 minutes, and then cooled to 0°C at a cooling rate of 10°C/min. The crystallization peak temperature (Tc) is determined from the thermogram of this cooling step. Fig. 1 is a thermogram showing the presence of two crystallization peak temperatures when the (B) constituent, which is an ionomer series resin composition, of Example 1 described later was cooled by differential scanning calorimetry. In Fig. 1 the thermogram is such that the two crystallization peak temperatures are not completely independent and the crystallization peak on the low temperature side appears like a shoulder; however, in the present invention, it does not matter whether the thermogram is completely independent or the thermogram is broad, if two peak temperatures are present in a temperature range of 60 to 90°C.

A block copolymer ionomer, or the like, can be used as the (B) constituent, which is an ionomer series resin composition, where at least two crystallization peak temperatures are present between 60°C and 90°C when cooled at a cooling rate of 10°C/min by differential scanning calorimetry. In addition, in the present invention, to carry the function of exhibiting mechanical properties such as satisfactory low temperature shrinkability and resistance to tearing, a mixed resin composition containing 70 mass% to 30 mass%, preferably 65 mass% to 40 mass%, and more preferably 60 mass% to 50 mass% of a (C) constituent described below, and 30 mass% to 70 mass%, preferably 35 mass% to 60 mass%, and more preferably 40 mass% to 50 mass% of a (D) constituent described below, can be used suitably for the (B) constituent.
(C) Ethylene/unsaturated carboxylic acid copolymer with an amount of unsaturated carboxylic acid of 10 mass% to 30 mass%, and a degree of neutralization by metal ion of 30 mass% to 80%
(D) Ethylene/unsaturated carboxylic acid copolymer with an amount of unsaturated carboxylic acid of 5 mass% to 15 mass% and a melt flow rate (JIS K7210, 190°C, load: 21.18N) of 0.2g/10 minute to 5g/10 minute

A polymer composition where the amount of ethylene in the above-mentioned (C) constituent is 50 mass% to 90 mass%, and preferably 50 mass% to 88 mass%, the amount of unsaturated carboxylic acid is 10 mass% to 30 mass%, and preferably 12 mass% to 20 mass%, and other unsaturated compound is 0 mass% to 40 mass%, and preferably 0 mass% to 20%, can be used suitably. In addition, regarding degree of neutralization, those with 30% to 80% of the amount of unsaturated carboxylic acid neutralized within the metallic cation copolymer constituent, and preferably 40% to 60%, can be used suitably. If the above-mentioned (C) constituent has a polymer composition and a degree of neutralization within these limits, as crystallinity of ionomer resin decrease to some extent, transparency of the film can be retained. In addition, for instance, in the cooling step from molten state during a drawing process as in inflation forming, ionic crosslink remains in a pseudo-crosslinked state, allowing the stretch shrink film to be provided with suitable low temperature shrinkability.

A polymer composition where the amount of ethylene in the above-mentioned (D) constituent is 50 mass% to 90 mass%, and preferably 60 mass% to 88 mass%, the amount of unsaturated carboxylic acid is 5 mass% to 15 mass%, and preferably 6 mass% to 12 mass%, and other unsaturated compound is 0 mass% to 45 mass%, and preferably 0 mass% to 20%, can be used suitably. If the above-mentioned (D) constituent has this range of polymer composition, compatibility with the ionomer resin is relatively satisfactory, and transparency of the film can be retained. In addition, mechanical properties such as suitable resistance to tearing when packaging automatically can be provided.

Regarding the crystallization peak temperatures of the mixed resin composition of the (C) constituent and the (D) constituent, the crystallization peak temperature derived from the (C) constituent present is preferably on the lower temperature side from the crystallization peak temperature derived from the (D) constituent, when cooled by differential scanning calorimetry. Establishing such a temperature relationship allows excessive orientation accompanying drawing to be suppressed at a temperature region near the crystallization peak derived from the (D) constituent, for instance, in the cooling step from molten state during a drawing process as in inflation forming, such that when packaging with an automatic packaging machine, less longitudinal tear and rupture trouble of the film occur, simultaneously, as the ionic crosslinks are in a pseudo-crosslinked state until the temperature region near the crystallization peak derived from the (C) constituent, this allows a distortion that is adequate for low temperature shrinkability to be provided.

The following indications may be considered as reasons allowing thermal shrinkage characteristics (low temperature shrinkability) to be provided using the above-mentioned ionomer series resin composition.

In an ionomer series resin composition, carboxyl groups within the copolymer are neutralized with a cation of a metal, or the like, and the portion that has been neutralized is ionized. With degree of neutralization becoming higher, the ionized portions condense via the strength of ionic bonds to become ionic crosslinks. Ionic crosslinks are condensation via ionic bonds, and although when under a force greater than the strength of the ionic bond the portions that were condensed will peel off, with a force weaker than the strength of the ionic bond, they are in a pseudo-crosslinked state. Thus, molten viscosity increases concomitantly to the amount of degree of neutralization, and this effect is greater when close to the melting point of the ionomer series resin composition. It is thought that within the limits of the above-mentioned polymer composition and degree of neutralization, through these effects, extrusion capability can be provided, concretely, low temperature shrinkability suitable for a stretch shrink film with no excessive increase in molten viscosity, as ionic crosslinks remain in a pseudo-crosslinked state, for instance, in the cooling step from molten state during a drawing process as in inflation forming.

The MFR (JIS K7210, 190°C, load21.18N) of the above-mentioned (B) constituent, which is an ionomer series resin composition, is preferably 0.2g/10 minute to 20g/10 minute, more preferably 0.3g/10 minute to 10g/10 minute, and even more preferably 0.5g/10 minute to 3g/10 minute. Within these limits, inflation formability such as bubble stability, and mechanical properties suitable for a stretch shrink film can be obtained without an abrupt increase in backpressure during extrusion forming.

There is no particular limitation on the method for producing the (B) constituent, which is an ionomer series resin composition, and for instance, the well-known producing method described in Japanese Patent Publication No. S39-6810, or the like, can be used. In addition, with a copolymer resin such as of ethylene and acrylic acid or methacrylic acid not containing metal ion as the raw materials, the required amount of acetyl acetone metal complex, metal oxide, fatty acid metal salt or the like may be added to introduce ionic crosslinks, so as to have a ionomer series resin composition at the time of the forming process. Copolymer resin such as of ethylene and acrylic acid or methacrylic acid, can also be polymerized with a post metallocene catalyst.

As a concrete product of the above-mentioned ionomer series resin composition, the product name "HIMILAN" of Du Pont- Mitsui Polychemicals Co.,Ltd. can be cited. In addition, as concrete products of copolymer resin such as of ethylene and acrylic acid or methacrylic acid not containing metal ion, product name "NUCREL" from Du Pont- Mitsui Polychemicals Co.,Ltd., product name "NOVATEC EAA" from Japan Polychem Corporation, and the like, can be cited.

As mentioned above, the stretch shrink layered film of the present invention is a layered film comprising at least three layers having two surface layers having as principal constituent the (A) constituent, which is an ethylene series polymer, and a middle layer having as principal constituent the (B) constituent, which is an ionomer series resin composition; however, as necessary, such as to improve mechanical properties and interlayer adhesive properties, other layers (hereinafter, may sometimes be abbreviated as P layer) may be optionally introduced within a range that does not exceed the main purport of the present invention. Herein, the surface layer (hereinafter, may be sometimes abbreviated as S layer) may be layered elsewhere than on both surface, that is to say, may be layered in the middle. In addition, for the middle layer (hereinafter, may be sometimes abbreviated as M layer), the presence of at least one layer between both surface layers is sufficient, and two or more layers may be present. For instance, sequentially from the front side, a three layer constitution comprising (S layer)/(M layer)/(S layer), a four layer constitution comprising (S layer)/(P layer)/(M layer)/(S layer), a five layer constitution comprising (S layer)/(P layer)/(M layer)/(P layer)/(S layer), (S layer)/(M layer)/(P layer)/(M layer)/(S layer), (S layer)/(M layer)/(S layer)/(M layer)/(S layer), and the like, can be cited representatively. In this case, regarding the resin composition and thickness ratio of each layer, they may be identical or different.

In the present invention, the preferred laminate constitution is the three layer constitution comprising (S layer)/(M layer)/(S layer), and by adopting this layer constitution, a stretch shrink layered film having satisfactory low temperature shrinkability, tight film tension after shrinkage, packaging finish in automatic packaging machine, and the like, in addition, also with excellent regeneration additivity (in general, added to the middle layer) can be obtained with good productivity and economically, which is an object of the present invention.

In the stretch shrink layered film of the present invention, the middle layer is set to a thickness ratio of 35% to 90% with respect to the total film thickness, while the total value of thermal shrinkage ratio in the longitudinal direction and transversal direction when immersed for 10 seconds in a 80°C oil bath is set to 30% or greater.

If the thickness ratio with respect to the total film thickness of middle layer is within the limits considered, stable film forming processability is obtained, for instance, even if a drawing process in a cooling step from the molten state as in inflation forming is used as film forming method, in addition, thermal shrinkage characteristics such as low temperature shrinkability suitable for a stretch shrink film, transparency and mechanical properties such as flexibility, can be provided relatively easily, including aspects of material costs. If more emphasis is on stable film forming processability, flexibility and aspects of material costs, the thickness ratio is preferably 35% to 60%, more preferably 35% to 50%, if more emphasis is on large low temperature shrinkability in the drawing process of a cooling step from the molten state as in inflation forming, tight film tension after shrinkage, and the like, the thickness ratio is preferably 60% to 90%, and more preferably 65% to 85%. If there are two or more middle layers in the laminate constitution as mentioned above, it suffices to calculate the thickness ratio using the total thickness of all the middle layers.

Note that the total thickness of the stretch shrink layered film of the present invention is not limited in particular; however it is in a range that is on the same order as thickness of a conventional stretch film, that is to say in a range of on the order of 5µm to 30µm, and preferably 8µm to 20µm.

In addition, if the total value of the thermal shrinkage ratio in the longitudinal direction and the transversal direction when immersed for 10 seconds in a 80°C oil bath is 30% or greater, preferably 40% to 120%, and more preferably 45% to 100%, wrinkles after stretch packaging using the stretch shrink layered film of the present invention can be removed often by passage through shrink tunnel, in addition, problems such as causing the tray to deform, film folded under the tray bottom curling when heat sealing, deformation occurring on the rolled film (roll) due to tightening over time under natural shrinkage, and the like, occur less.

Note that, although varying with the magnitude relationship between the film width and the tray size, and the like, the thermal shrinkage ratio in the longitudinal direction and the transversal direction when immersed for 10 seconds in a 80°C oil bath, is respectively 15% to 60%, and preferably 20% to 55%. If the values are within these limits, packaging finish with respect to trays of various sizes and stability over time of rolled films are excellent.

The above thermal shrinkage ratio can be adjusted to a desired range mainly by varying the thickness constitution ratio of both surface layers and middle layer, draw ratio, blow-up ratio (bubble diameter/die diameter), temperature conditions such as stretch temperature and cooling condition. For instance, if the thermal shrinkage ratio is smaller than the desired value, it suffices to adjust suitably the temperature conditions so as to increase heat shrink deformation at lower temperatures, such as, by increasing the draw ratio in the longitudinal and/or transversal direction, increasing the amount of cooling blow in external surface cooling or using internal surface cooling in combination. Conversely, if the thermal shrinkage ratio is greater than the desired value, it suffices to adjust suitably the temperature conditions so as to decrease heat shrink deformation at lower temperatures, such as by decreasing the draw ratio in the longitudinal and/or transversal direction, decreasing the amount of cooling blow in external surface cooling and weakening internal surface cooling.

In addition to the (B) constituent, an ethylene series polymer, which is the above-mentioned (A) constituent, may be mixed to the middle layer, in a range not exceeding the main purport of the present invention. It becomes an effective means when the main objective is, for instance, addition of recycle resin generated by trimming loss and the like, improvement of mechanical properties in the entire stretch shrink layered film obtained, in particular, properties such as elastic modulus (stiffness) and tear strength, reduction of material cost, or the like. When mixing, the mix mass ratio is (A)/(B) = 1 to 50/99 to 50, preferably 5 to 50/95 to 50, and more preferably 10 to 45/90 to 55.

In so doing, ethylene-vinyl acetate copolymer having an amount of vinyl acetate of 10 mass% to 25 mass% can be cited as the (A) constituent that can be mixed most preferably. This is because it can be also used suitably as both surface layers, and, has no large practical problems including transparency and mechanical properties when recycle resin generated from trimming loss and the like is added, and aspects of material costs, and is also available stably as an industrial material.

As necessary, various additives and/or resins other than the above-mentioned (A) constituent and (B) constituent can be mixed suitably to the surface layer and/or middle layer, within ranges not exceeding the main purport of the present invention. This allows all physical properties, such as, anti-clouding properties, antistatic properties, slippability, autoadhesiveness and mechanical properties, to be further adjusted and improved.

As various additives, for instance, oxidation inhibitor, anti-clouding agent, antistatic agent, lubricant, nucleating agent, and the like, can be cited. As additives used preferably in the present invention, aliphatic alcohol series fatty acid esters, which are compounds of an aliphatic alcohol having 1 to 12 and preferably 1 to 6 carbons, and an aliphatic having 10 to 22 and preferably 12 to 18 carbons can be cited; concretely, monoglycerin oleate, diglycerin monooleate, polyglycerin oleate, glycerin triricinoleate, glycerin acetyl cinoleate, polyglycerin stearate, polyglycerol lautrate, methyl acetyl ricinoleate, ethyl acetyl ricinoleate, butyl acetyl ricinoleate, propylene glycol oleate, propylene glycol lautrate, pentaerythritol oleate, polyethyleneglycol oleate, polyethyleneglycol sorbitan oleate, polyethyleneglycol sorbitan lautrate, and the like, can be cited. In addition, polyalkylene ether polyol can be used, and concretely, polyethyleneglycol, polypropylene glycol, and the like, can be cited. In addition, at least one species of compound chosen from paraffin series oils can be added. The preferred addition amount of these additives is 0.1 parts in mass to 12 parts in mass, preferably 1 part in mass to 8 parts in mass, and more preferably 1 part in mass to 5 parts in mass, taking as 100 parts in mass the total of the resin constituent of each layer. In the present invention, addition to at least the surface layer is preferred.

The ionomer series resin composition, which is principal constituent of the middle layer, sometimes have the properties of absorbing or react with additives such as anti-clouding agent, therefore, when mixing an additive such as anti-clouding agent to the surface layer only, it is important to consider this and perform formulation such increasing the amounts.

In addition, there is no particular limitation on the resins other than the above-mentioned (A) constituent and (B) constituent as long as the main purport of the present invention is not exceeded, and for instance, propylene series or styrene series thermoplastic elastomer, various impact-resistance improvers and compatibilizers, adhesive resins, plasticizers, and the like, can be cited. The preferred addition amount of these resins is 0 parts in mass to 20 parts in mass, preferably 0 parts in mass to 15 parts in mass, and more preferably 0 parts in mass to 10 parts in mass, taking as 100 parts in mass the total of the resin constituent of each layer.

There is no particular limitation regarding the mechanical properties of the stretch shrink layered film of the present invention; however a 30% drawing stretch stress (hereinafter, may be sometimes abbreviated as σ30) of the film in the longitudinal direction and the transversal direction in a range of 10MPa to 60MPa for both is preferred, and a range of 20MPa to 50MPa is more preferred. If σ30 is within the limits considered, sufficient tight feel and strength of film tension can be exhibited on products packed with numerous packaging machines, and in addition, as the film is not too hard, cracking or deformation of tray also do not occur when used in a push up type packaging machine.

The above-mentioned σ30 can be adjusted to a desired range mainly by varying the thickness constitution ratio of both surface layers and the middle layer, draw ratio, blow-up ratio (bubble diameter/die diameter), temperature conditions such as stretch temperature and cooling condition. For instance, if σ30 is lower than the desired value, it suffices to perform suitable adjustments such as increasing the crystallinity of the entire layered film by adjusting the thickness constitution ratio, mix composition, and the like, increasing the draw ratio in the longitudinal direction and/or transversal direction, and the like. Conversely, if σ30 is greater than the desired value, it suffices to perform suitable adjustments such as decreasing the crystallinity of the entire layered film by adjusting the thickness constitution ratio, mix composition, and the like, decreasing the draw ratio in the longitudinal direction and/or transversal direction, and the like.

Hereinafter, methods for producing the stretch shrink layered film of the present invention will be described.

For the preparation method, various well-known producing methods can be applied, and there is not particular restriction as long as the main purport of the present invention is not exceeded. As film layering method, for instance, co-extrusion layering method, lamination method, dry lamination method, and the like, can be cited. Among these, in the present invention, co-extrusion layering method that attach by melting is used preferably. Concretely, it is a method whereby several extruders adapted to the number of layers are used for melt-extrusion, the molten resin is developed by feed block, multi manifold, or the like, and layered.

As method for providing low temperature shrinkability, which is one main object of the present invention, a method used in general, such as, tenter method and tubular method, can be applied, whereby melt-extruded resin is temporarily solidified by cooling or solidified by rapid cooling, a raw film or raw tube is collected, and then reheated and stretched.

In addition, stretch shrink layered film of the present invention having excellent low temperature shrinkability can be also obtained by the so-called inflation method which is a method whereby melt-extruded resin is extruded from a circular die in a cylindrical form without being temporarily solidified by cooling or solidified by rapid cooling and air is blown into this cylinder to inflate the molten cylinder.

This is thought to be due to the cooling effect working in the process of pulling the molten resin from the circular die and thinning the film, orienting the molecules constituting the film, and the extent of this orientation being mainly altered by the difference in the molten viscosity and the rate of solidification or the rate of crystallization in the cooling process of the resin used, the blow-up ratio (bubble diameter/die diameter), bubble shape, and the like, in the inflation method.

In the present invention, when inflation forming, a constant amount of air is inserted into the molten cylinder to adjust the amount of pressure while adjusting the amount of cooling with a medium such as cold wind, and the blow-up ratio is set to 3.5 or greater, preferably 4 to 12, and more preferably 5 to 10. Next, by adjusting the film drawing speed, the deformation factor of the resin extruded from the circular die into a cylindrical shape is adjusted to about 50 to 200-fold for the entire film, and preferably 70 to 120-fold. Herein, deformation factor represents the value obtained by dividing the lip gap of the circular die with the thickness of the film obtained. For instance, if the lip gap of the circular die is 1 mm (1000µm) and the thickness of the obtained film is 10µm, the deformation factor is 100-fold. In addition, if the lip gap of the circular die is 2mm and the thickness of the obtained film is 10µm, the deformation factor is 200-fold. The calculation of the deformation factor is assumed not to be influenced by the blow-up ratio. In so doing, as the cooling method, the method of cooling from the external surface or the internal surface side of a cylindrically-shaped film, and the method of cooling simultaneously from both the external surface side and the internal surface side of a cylindrically-shaped film, may both be adopted.

In order to adjust the thermal shrinkage ratio, decrease the natural shrink ratio and suppress the occurrence of curls, and the like, heat processing such as longitudinal stretching between heat rolls, various heat fixation and ageing can be carried out, as necessary, on the stretch shrink layered film obtained by the above-mentioned method. In addition, with the objective of providing and promoting anti-clouding properties, antistatic properties, adhesiveness, and the like, treatments such as corona discharging and ageing, furthermore, surface treatment or surface processing such as printing and coating, can also be carried out.

### [Example]

Hereinafter, further description will be given by way of Examples; however, these are not limiting the present invention in any way. For the films shown in the present specification, various measurement values and evaluations were carried out as follows. Note that herein, direction of flow of the film from the extruder is referred to as the longitudinal direction, and the direction perpendicular thereto as the transversal direction.

### (1) Thermal shrinkage ratio

A test piece from a film cut out into a strip of 140mm length × 10mm width respectively in the longitudinal direction and transversal direction of the obtained film, with marking lines of 100mm interval in length marked in the middle thereof, was immersed in a 80°C oil bath for 10 seconds, after taking the test piece out, the length between the marking lines was measured and the shrink ratio in % value was determined from the length between the marking lines before and after oil bath immersion.
Note that measurements were performed ten times each, the mean value thereof was calculated and the first decimal was rounded off.

### (2) Crystallization peak temperature (Tc)

Using the differential thermal scanning calorimeter model DSC-7 manufactured by Perkin-Elmer, Inc., according to JIS K7121, approximately 10mg of ionomer resin constituting the middle layer was precisely weighted on an aluminum pan for DSC measurement, heated from room temperature to 200°C at a heating rate of 10°C/min, kept at the same temperature for 2 minutes, and then cooled to 0°C at a cooling rate of 10°C/min. The crystallization peak temperature (Tc) was determined from the thermogram in this cooling step.

### (3) 30% drawing stretch stress (σ30)

A test piece from a film cut out into a strip of 100mm length × 10mm width, and using a tension tester (manufactured by Shimadzu Corporation, Model Number: AGS-H500N), tensile test was carried out with a chuck spacing of 40mm and a tensile speed of 200mm/minute, 30% pull stretch load was read from the obtained chart and converted into 30% drawing stretch stress (MPa). Note that measurements were performed three times each, the mean value thereof was calculated and the first decimal was rounded off.

### (4) Suitability to automatic packaging machine

Using a 400mm-wide film, suitability to automatic packaging machine was evaluated with the following criteria, when 1000 conventional expanded polystyrene trays (length: 200mm; width: 150mm; height: 15mm) containing 200g of clay (thickness: 10mm) were packaged at a speed of 70 packs/minute with a horizontal pillow type packaging machine (STN7500, manufactured by Omori Co., Ltd.) and a shrink tunnel (Model C-300, manufactured by Omori Co., Ltd., attached to the pillow packaging machine; hot air setting temperature: 85°C; transit time: 3 seconds).
(⊚(double circle)): no rupture trouble at all (0 times/out of 1000)
(○(circle)): tear or rupture troubles occurred once to three times, but posing no practical problem
(× (cross)): four or more tear or rupture troubles occurred and posing practical problem

### (5) Packaging finish

Using a 400mm-wide film, conventional expanded polystyrene trays (length: 200mm; width: 150mm; height: 15mm) containing 200g of clay (thickness: 10mm) were packaged with a horizontal pillow type packaging machine (STN7500, manufactured by Omori Co., Ltd.) and a shrink tunnel (Model C-300, manufactured by Omori Co., Ltd., attached to the pillow packaging machine; hot air setting temperature: 90°C; transit time: 3 seconds), and the obtained package samples were evaluated with the following criteria.
(⊚(double circle)): almost no wrinkle or sagging on the tray top, and film tension is sufficient
(○(circle)): almost no wrinkle or sagging on the tray top, and presence of film tension
(×(cross)): presence of wrinkle or sagging on the tray top, or absence of film tension

### (6) Sagging over time

Package samples, obtained similarly to the above (5) packaging finish, were stacked by three and left for 10 hours in a thermostatic chamber at 5°C, then, the state of the top surface of the lowermost package sample was evaluated with the following criteria.
(O(circle)): almost no sagging on the tray top, and film tension is sufficient
(× (cross)): presence sagging on the tray top, and absence of film
tension

### (Example 1)

As the (A) constituent of both surface layers, which is an ethylene series polymer, a resin composition from 2.7 parts in mass of diglycerin monooleate as anti-clouding agent melt-kneaded at 180°C to 200°C in 100 parts in mass of ethylene-vinyl acetate copolymer (manufactured by Japan Polyethylene Corporation; product name: NOVATEC EVA LV-440; amount of vinyl acetate: 15 mass%; MFR: 2.2g/10 minute; melting point: 95°C), was used.

As the (B) constituent of the middle layer, which is an ionomer series resin composition, a resin composition comprising an ionomer (base polymer: ethylene/methacrylic acid copolymer; amount of methacrylic acid: 15 mass%; neutralization metal ion species: zinc; degree of neutralization: 59%; MFR: 0.7g/10 minute; melting point: 88°C) was used.

With the thickness of both surface layers set at 3.0µm each and the thickness of the middle layer set at 6.0µm, [the layers] were converged from respectively different extruder, co-extrusion inflation forming was carried out with a circular three layer die temperature of 200°C, a lip gap of 1.2mm and a blow-up ratio of 5.5, to obtain a stretch shrink layered film with a total thickness of 12*µ*m (3.0*µ*m/6.0*µ*m/3.0*µ*m).

### (Example 2)

A stretch shrink layered film with a total thickness of 12*µ*m was obtained by forming similarly to Example 1, except that the thickness constitution ratio of each layer was surface layer/middle layer/surface layer=1.5µm/9.0µm/1.5µm.

### (Example 3)

A stretch shrink layered film with a total thickness of 12*µ*m (3.0*µ*m/6.0*µ*m/3.0*µ*m) was obtained by forming similarly to Example 1, except that the amount of anti-clouding agent added to both surface layers was 4.0 parts in mass, and the (B) constituent of the middle layer was an ionomer (base polymer: ethylene/methacrylic acid copolymer; amount of methacrylic acid: 15 mass%; neutralization metal ion species: sodium; degree of neutralization: 54%; MFR: 0.9g/10 minute; melting point: 89°C).

### (Example 4)

A stretch shrink layered film with a total thickness of 12µm (3.0µm/6.0µm/3.0µm) was obtained by forming similarly to Example 1, except that the (B) constituent of the middle layer was an ionomer (base polymer: ethylene/methacrylic acid copolymer; amount of methacrylic acid: 15 mass%; neutralization metal ion species: zinc; degree of neutralization: 20%; MFR: 16g/10 minute; melting point: 90°C).

### (Example 5)

A stretch shrink layered film with a total thickness of 12*µ*m (3.0*µ*m/6.0*µ*m/3.0*µ*m) was obtained by forming similarly to Example 1, except that the middle layer was formed from a mixed resin composition of 20 parts in mass of ethylene-vinyl acetate copolymer (manufactured by Japan Polyethylene Corporation; product name: NOVATEC EVA LV-440; amount of vinyl acetate: 15 mass%; MFR: 2.2g/10 minute; melting point: 95°C) and 80 parts in mass of ionomer (base polymer: ethylene/methacrylic acid copolymer; amount of methacrylic acid: 15 mass%; neutralization metal ion species: sodium; degree of neutralization: 54%; MFR: 0.9g/10 minute; melting point: 89°C).

### (Example 6)

A stretch shrink layered film with a total thickness of 12*µ*m (3.0*µ*m/6.0*µ*m/3.0*µ*m) was obtained by forming similarly to Example 1, except that the (A) constituent of both surface layers was an ethylene-vinyl acetate copolymer (amount of vinyl acetate: 20 mass%; MFR: 2.5g/10 minute; melting point: 91 °C).

### (Comparative Example 1)

A stretch shrink layered film with a total thickness of 12µm (3.0µm/6.0µm/3.0µm) was obtained substantially as a monolayer film, by forming similarly to Example 1, except that the middle layer was ethylene-vinyl acetate copolymer (manufactured by Japan Polyethylene Corporation; product name: NOVATEC EVA LV-440; amount of vinyl acetate: 15 mass%; MFR: 2.2g/10 minute; melting point: 95°C).

### (Comparative Example 2)

A stretch shrink layered film with a total thickness of 12*µ*m (3.0*µ*m/6.0*µ*m/3.0*µ*m) was obtained by forming similarly to Example 1, except that the (B) constituent of the middle layer was ionomer (base polymer: ethylene/methacrylic acid copolymer; amount of methacrylic acid: 9 mass%; neutralization metal ion species: zinc; degree of neutralization: 8%; MFR: 5g/10 minute; melting point: 98°C).

### (Comparative Example 3)

A stretch shrink layered film with a total thickness of 12*µ*m was obtained by forming similarly to Example 1, except that the thickness constitution ratio of each layer was surface layer/middle layer/surface layer=4.8µm/2.4µm/4.8µm.

Using the stretch shrink layered films of Examples 1 to 6 and Comparative Examples 1 to 3, each test of (1) thermal shrinkage ratio, (3) 30% drawing stretch stress (σ30), (5) packaging finish and (6) sagging over time, were carried out.

The results are shown in the following Table 1.

**[Table 1]**

| Evaluation item | | Thermal shrinkage (%) | | σ30 (MPa) | | Packaging finish | Sagging over time |
|---|---|---|---|---|---|---|---|
| | | Longitudinal direction | Transversal direction | Longitudinal direction | Transversal direction | | |
| Example | 1 | 55 | 44 | 27 | 22 | O | O |
| | 2 | 52 | 53 | 39 | 42 | ⊚ | O |
| | 3 | 40 | 40 | 33 | 47 | O | O |
| | 4 | 32 | 23 | 28 | 18 8 | O | O |
| | 5 | 31 | 18 | 28 | 30 | O | O |
| | 6 | 56 | 46 | 26 | 22 | O | O |
| Comparative Example | 1 | 15 | 10 | 15 | 8 | X | X |
| | 2 | 13 | 12 | 22 | 15 | X | X |
| | 3 | 12 | 10 | 15 | 12 | X | X |

From Table 1, the stretch shrink layered film of the present invention was found to have excellent low temperature shrinkability (80°C×10 seconds) tight film tension after shrinkage and packaging finish with an automatic packaging machine, or the like. In addition, In addition, it was confirmed that the film could be prepared also by inflation forming. (Examples 1 to 6).

In contrast, in the case where the layer constitution does not have the middle layer with an ionomer series resin composition as the principal constituent (Comparative Example 1), in the case where the total value of thermal shrinkage ratio is less than 30% (Comparative Example 2), and in the case where the thickness ratio of the middle layer with respect to the total film thickness is low (Comparative Example 3), low temperature shrinkability was insufficient, and problems were found to exist in the tight film tension after shrinkage and the packaging finish with automatic packaging machine, or the like.

### (Example 7)

As the (A) constituent of both surface layers, which is an ethylene series polymer, a resin composition from 5.0 parts in mass of diglycerin monooleate as anti-clouding agent melt-kneaded at 180 to 200°C in 100 parts in mass of ethylene-vinyl acetate copolymer (manufactured by Japan Polyethylene Corporation; product name: NOVATEC EVA LV-440; amount of vinyl acetate: 15 mass%; MFR: 2.2g/10 minute; melting point: 95°C), (hereinafter abbreviated as A-1) was used.

As the (B) constituent of the middle layer, which is an ionomer series resin composition, a resin composition in which 50 mass% of ionomer (manufactured by Du Pont-Mitsui Polychemicals Co.,Ltd.; product name: HIMILAN 1706; base polymer: ethylene/methacrylic acid copolymer; amount of methacrylic acid: 15 mass%; neutralization metal ion species: zinc; degree of neutralization: 59%; MFR: 0.7g/10 minute; melting point: 88°C), which is to be the (C) constituent, and 50 mass% of ethylene/acrylic acid copolymer (manufactured by Japan Polyethylene Corporation; product name: LEXPEARL A-210K; amount of acrylic acid: 7 mass%; MFR: 3.0g/10 minute; melting point: 98°C) as ethylene/unsaturated carboxylic acid copolymer, which is to be the (D) constituent, were melt-knead at 180 to 200°C, was used.

Both surface layers and middle layer were converged from different extruders, co-extrusion inflation forming was carried out with a circular three layer die temperature of 185°C, a lip gap of 1.2mm and a blow-up ratio of 10.0, to obtain a stretch shrink layered film with a total thickness of 13µm (thickness ratio: 1/6/1).

Note that the crystallization peak temperature (Tc) of the (B) constituent, which is an ionomer series resin composition, used in the present Example was measured by differential scanning calorimetry. As shown in Fig. 1, the crystallization peak temperature derived from the (C) constituent was observed at 69.5°C, and the crystallization peak temperature derived from the (D) constituent was observed at 80.4°C.

### (Example 8)

A stretch shrink layered film with a total thickness of 13*µ*m was obtained by forming similarly to Example 7, except that as the (B) constituent, which is an ionomer series resin composition, the proportion of (C) constituent and (D) constituent was (C) constituent/(D) constituent=55 mass%/45 mass%.

### (Example 9)

A stretch shrink layered film with a total thickness of 13*µ*m was obtained by forming similarly to Example 7, except that as the (B) constituent, which is an ionomer series resin composition, the proportion of (C) constituent and (D) constituent was (C) constituent/(D) constituent=60 mass%/40 mass%, and the thickness ratio was surface layer/middle layer/surface layer=1/3/1.

### (Example 10)

A stretch shrink layered film with a total thickness of 13*µ*m was obtained by forming similarly to Example 7, except that the (A) constituent, which is an ethylene series polymer, was ethylene-vinyl acetate copolymer (manufactured by Du Pont-Mitsui Polychemicals Co.,Ltd.; product name: EVAFLEX EV-460; amount of vinyl acetate: 19 mass%; MFR: 2.5g/10 minute; melting point: 84°C).

### (Comparative Example 4)

A stretch shrink layered film with a total thickness of 13µm was obtained by forming similarly to Example 7, except that the middle layer was formed with the above-mentioned (D) constituent at 100 mass%.

### (Comparative Example 5)

A stretch shrink layered film with a total thickness of 13*µ*m was obtained by forming similarly to Example 7, except that the (D) constituent was replaced by a linear low density polyethylene (manufactured by Nippon Unicar Company Limited; product name: NUC polyethylene-LL NUCG5225; MFR: 2.0g/10 minute; melting point: 110°C).

### (Comparative Example 6)

A stretch shrink layered film with a total thickness of 13µm was obtained by forming similarly to Example 7, except that the thickness ratio of each layer was surface layer/middle layer/surface layer=1/1/1.

Using the stretch shrink layered films of Examples 7 to 10 and Comparative Examples 4 to 6, each test of (1) thermal shrinkage ratio, (2) crystallization peak temperature (Tc), (4) suitability to automatic packaging machine, (5) packaging finish and (6) sagging over time, were carried out.

The results are shown in the following Table 2.

**[Table 2]**

| Evaluation item | | Thermal shrinkage (%) | | Crystallization peak temperature (°C) | | Suitability to automatic packaging machine | Packaging finish | Sagging over time |
|---|---|---|---|---|---|---|---|---|
| | | Longitudinal direction | Transversal direction | | | | | |
| Example | 7 | 17 | 18 | 69.5 | 80.4 | ⊚ | ⊚ | O |
| | 8 | 18 | 16 | 69.0 | 80.4 | ⊚ | ⊚ | O |
| | 9 | 20 | 22 | 68.3 | 80.9 | O | ⊚ | O |
| | 10 | 18 | 19 | 69.5 | 80.4 | ⊚ | O | O |
| Comparative Example | 4 | 8 | 11 | 88.2 | - | ⊚ | X | X |
| | 5 | 2 | 13 | 63.2 | 110.3 | O | X | X |
| | 6 | 8 | 12 | 69.5 | 80.4 | ⊚ | X | X |

From Table 2, by the presence in the stretch shrink layered film of the present invention of at least two crystallization peak temperatures between 60°C and 90°C when cooling at a cooling rate of 10°C/min by differential scanning calorimetry, it was found that low temperature shrinkability and tight tension after shrinkage were obtained, there were not tear or rupture trouble during packaging with an automatic packaging machine or the like, and packaging finish was excellent. In addition, it was confirmed that the film could be prepared also by inflation forming (Examples 1 to 4).

In contrast, in the case where the total value of thermal shrinkage ratio was less than 30%, and there was a single crystallization peak temperature (Comparative Example 4), although suitability to automatic packaging machine was satisfactory, problems were found to exist in the packaging finish and sagging after stacking package samples. In the case where the crystallization peak temperature is high (Comparative Example 5) and the case where the thickness ratio of the middle layer with respect to the total film thickness was small (Comparative Example 6), low temperature shrinkability was found to be poor, and not enough wrinkles could be removed after shrinkage, such that problems existed in the packaging finish, and the like.

## Claims

1. A stretch shrink layered film, which is a layered film constituted by at least three layers, both surface layers having as principal constituent an (A) constituent, which is an ethylene series polymer, the middle layer having as principal constituent a (B) constituent, which is an ionomer series resin composition, and, the thickness ratio of the middle layer with respect to the total film thickness being 35% to 90%, while the total value of thermal shrinkage ratio in the longitudinal direction and transversal direction when immersed in an 80°C oil bath for 10 seconds is 30% or greater.

2. The stretch shrink layered film as recited in Claim 1, wherein at least two crystallization peak temperatures are present between 60°C and 90°C when said (B) constituent, which is an ionomer series resin composition, which is the principal constituent of the middle layer, is cooled at a cooling rate of 10°C/min by differential scanning calorimetry.

3. The stretch shrink layered film as recited in Claim 1 or 2, wherein said (A) constituent, which is an ethylene series polymer, is at least one species of ethylene series polymer chosen from among low density polyethylene, linear low density polyethylene, linear very low density polyethylene, ethylene-vinyl acetate copolymer, ethylene-acrylic acid ester copolymer and ethylenemethacrylic acid ester copolymer.

4. The stretch shrink layered film as recited in Claim 1 or 2, wherein said (A) constituent, which is an ethylene series polymer, is an ethylene-vinyl acetate copolymer with an amount of vinyl acetate of 8 mass% to 30 mass%, and a melt flow rate (JIS K7210, 190°C; load: 21.18N) of 0.2g/10 minute to 10g/10 minute.

5. The stretch shrink layered film as recited in any of Claims 1 to 4, wherein the melting point of said (A) constituent, which is an ethylene series polymer, is 65°C to 100°C.

6. The stretch shrink layered film as recited in any of Claims 1 to 5, wherein said (B) constituent, which is an ionomer series resin composition, is an ethylene/unsaturated carboxylic acid copolymer in which the amount of unsaturated carboxylic acid is 10 mass% to 30 mass%, and the degree of neutralization by metal ion is 15% to 80%.

7. The stretch shrink layered film as recited in Claim 2, wherein said (B) constituent, which is an ionomer series resin composition, is a mixed resin composition containing 70 mass% to 30 mass% of a (C) constituent and 30 mass% to 70 mass% of a (D) constituent, described below.
(C) ethylene/unsaturated carboxylic acid copolymer in which the amount of unsaturated carboxylic acid is 10 mass% to 30 mass% and the degree of neutralization by metal ion is 30% to 80%
(D) ethylene/unsaturated carboxylic acid copolymer in which the amount of unsaturated carboxylic acid is 5 mass% to 15 mass% and the melt flow rate (JIS K7210, 190°C, load: 21.18N) is 0.2g/10 minute to 5g/10 minute

8. The stretch shrink layered film as recited in any of Claims 1 to 7, wherein said middle layer is a mixed composition of said (A) constituent and said (B) constituent, the mixed mass ratio of said (A) constituent and said (B) constituent is (A)/(B) = (1 to 50)/(99 to 50).

9. The stretch shrink layered film as recited in any of Claims 1 to 8, wherein the 30% drawing stretch stress in the longitudinal direction and the transversal direction of said film is respectively 10MPa to 60MPa.

10. The stretch shrink layered film as recited in any of Claims 1 to 9, wherein the total value of thermal shrinkage ratio in the longitudinal direction and the transversal direction when immersed for 10 seconds in an 80°C oil bath is 40% to 120%.

11. The stretch shrink layered film as recited in any of Claims 1 to 10, produced by inflation method, which is a method whereby melt-extruded resin is extruded from a circular die into a cylindrical shape without being temporarily solidified by cooling, and air is blown into this cylinder to inflate the molten cylinder.

12. Process for producing the stretch shrink layered film as recited in any of Claims 1 to 11 produced by an inflation forming machine.
